# EUROPÄISCHE PATENTSCHRIFT

(11) **EP 4 146 370 B1**
(45) Veröffentlichungstag und Bekanntmachung des Hinweises auf die Patenterteilung: **10.07.2024**
(21) Anmeldenummer: 21745246.5
(22) Anmeldetag: 30.06.2021
(51) Int. Cl.: B01D 45/14, F01M 13/04

(54) **ZENTRIFUGALABSCHEIDER**
CENTRIFUGAL SEPARATOR
SÉPARATEUR CENTRIFUGE

(30) Priorität: 02.07.2020 DE 102020117515
(43) Veröffentlichungstag der Anmeldung: 15.03.2023
(73) Patentinhaber: Alfdex AB, 261 24 Landskrona (SE)
(72) Erfinder: KUHNERT, Gerhard, 78048 Villingen-Schwenningen (DE); STENGEL, Patrick, 78112 St. Georgen (DE); UEBERSOHN, Lars, 78050 Villingen-Schwenningen (DE)
(74) Vertreter: Alfa Laval Attorneys
(86) Internationale Anmeldenummer: PCT/EP2021/067956
(87) Internationale Veröffentlichungsnummer: WO 2022/003003

(56) Entgegenhaltungen:
- DE-A1- 102017 210 321
- DE-U1- 202016 106 867
- US-B2- 8 747 503
- ANONYMOUS: "SPALTROHRMOTOR, Wikipedia, Die freie Enzyklopädie.", 6 February 2019 (2019-02-06), pages 1 - 2, XP055832439, Retrieved from the Internet <URL:https://de.wikipedia.org/w/index.php?title=Spaltrohrmotor&oldid=185442142> [retrieved on 20210817]

## Beschreibung

Die Erfindung betrifft einen Zentrifugalabscheider gemäß dem Oberbegriff des Anspruchs 1.

Zentrifugalabscheider, insbesondere zum Abscheiden von Öl aus einem Blow-by-Gas eines Verbrennungsmotors sind grundsätzlich bekannt. Unter einem Blow-by-Gas wird grundsätzlich ein Gas verstanden, dass durch Undichtigkeiten zwischen Kolben, Kolbenringen und Zylinderlaufflächen in das Kurbelgehäuse entweicht und bei seinem Weg zu einer Kurbelgehäuseentlüftung Öl aufnimmt. Um dieses Blow-by-Gas vor seinem Austritt in die Umgebung zu reinigen und das aufgenommene Öl in das Kurbelgehäuse zurückzuführen, kommen Zentrifugalabscheider zum Einsatz.

Aus der DE 20 2016 106 867 U1 ist ein als Zentrifugalabscheider ausgebildeter Ölabscheider bekannt, welcher ein Zentrifugengehäuse, ein Antriebsgehäuse, einen Abscheiderotor, eine Welle, ein erstes Lager, ein zweites Lager und einen Antrieb umfasst, wobei in dem Antriebsgehäuse eine Antriebskammer ausgebildet ist, wobei in dem Zentrifugengehäuse eine Abscheidekammer ausgebildet ist, wobei zwischen der Antriebskammer und der Abscheidekammer eine Trennwand ausgebildet ist, wobei sich die Welle durch die Trennwand hindurch in die Abscheidekammer und in die Antriebskammer erstreckt, wobei der Abscheiderotor mit der Welle drehfest verbunden ist und in der Abscheidekammer angeordnet ist, wobei der Antrieb in der Antriebskammer angeordnet ist und die Welle antreibt.

Aus der US 8 747 503 B2 ist ein Gasreinigungsabscheider zum Trennen eines fließfähigen Gemisches von Stoffen unterschiedlicher Dichte bekannt, wobei der Abscheider ein Gehäuse umfasst, das einen Innenraum definiert, und eine Rotorbaugruppe umfasst, um das Stoffgemisch in eine Drehbewegung zu versetzen, wobei die Rotorbaugruppe in dem Innenraum angeordnet und um eine Achse relativ zum Gehäuse drehbar ist, wobei die Rotorbaugruppe einen Einlass zur Aufnahme des Stoffgemischs, einen Auslass, aus dem die Stoffe während des Betriebs aus der Rotorbaugruppe ausgestoßen werden, und einen Strömungsweg zur Herstellung einer Fluidverbindung zwischen dem Einlass und dem Auslass umfasst, wobei der Abscheider ferner einen Elektromotor zum Drehen der Rotoranordnung und einen Fluiddurchgang durch den Elektromotor zur Aufnahme einer im Gebrauch aus dem Stoffgemisch abgetrennten Substanz umfasst, wobei der Fluiddurchgang durch den Elektromotor zumindest teilweise durch einen Rotor und einen Stator des Elektromotors definiert ist, wobei in dem Fluiddurchgang angeordnete elektrische Leitungen in einem Isoliermaterial abgedichtet sind.

Aus der DE 10 2017 210321 A1 ist eine Abscheidevorrichtung zum Abscheiden von Verunreinigungen aus einem Rohgasstrom bekannt, wobei diese ein Gehäuse umfasst, welches einen zumindest näherungsweise zylinderförmigen Abscheideraum der Abscheidevorrichtung umgibt, wobei diese einen Rotationsabscheider zum Abscheiden von Verunreinigungen aus dem Rohgasstrom umfasst, wobei der Rotationsabscheider um eine Rotationsachse drehbar in dem Abscheideraum angeordnet ist, wobei diese eine Zuführvorrichtung zum Zuführen eines Rohgasstroms zu dem Rotationsabscheider umfasst, wobei diese eine Abführvorrichtung zum Abführen eines Reingasstroms aus dem Abscheideraum umfasst, wobei diese eine Antriebsvorrichtung zum Antreiben des Rotationsabscheiders umfasst, wobei die Antriebsvorrichtung zumindest teilweise in ein Gehäuseteil des Gehäuses der Abscheidevorrichtung integriert ist.

Aus der DE 20 2016 106867 U1 ist ein Ölabscheider bekannt, wobei dieser ein in eine Antriebskammer und eine Abscheidekammer unterteiltes Gehäuse umfasst, wobei dieser eine Trennwand umfasst, die die Antriebskammer und die Abscheidekammer voneinander trennt, wobei dieser einen in dem Gehäuse angeordneten Rotor umfasst, welcher ein Abscheideelement in der Abscheidekammer, ein Antriebselement in der Antriebskammer und eine sich in die Abscheidekammer und in die Antriebskammer erstreckende Welle aufweist, die das Abscheideelement und das Antriebselement miteinander drehbar verbindet, wobei ein in der Trennwand zwischen Antriebskammer und Abscheidekammer angeordnetes Lager für die Welle umfasst ist.

Es ist Aufgabe der Erfindung, einen Zentrifugalabscheider vorzuschlagen, welcher einfach aufgebaut, kompakt und robust ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Ein Zentrifugalabscheider zum Abscheiden von Öl umfasst ein Zentrifugengehäuse, ein Antriebsgehäuse, einen Abscheiderotor, eine Welle, ein erstes Lager, ein zweites Lager und einen Antrieb, wobei in dem Antriebsgehäuse eine Antriebskammer ausgebildet ist, wobei in dem Zentrifugengehäuse eine Abscheidekammer ausgebildet ist, wobei zwischen der Antriebskammer und der Abscheidekammer eine Trennwand ausgebildet ist, wobei die Trennwand eine Öffnung umfasst, wobei sich die Welle durch die Öffnung der Trennwand hindurch in die Abscheidekammer und in die Antriebskammer erstreckt, wobei der Abscheiderotor mit der Welle drehfest verbunden ist und in der Abscheidekammer angeordnet ist, wobei der Antrieb in der Antriebskammer angeordnet ist und die Welle antreibt und wobei der Antrieb als Elektromotor ausgebildet ist, welcher die Welle direkt antreibt, derart dass die Welle eine Motorwelle des Elektromotors bildet. Hierdurch ist ein einfacher, kompakter und robuster Aufbau des Zentrifugalabscheiders gegeben.

Erfindungsgemäß ist es dabei vorgesehen, dass der Elektromotor einen Spalttopf umfasst, wobei ein hohlzylindrischer Mittelabschnitt des Spalttopfes zwischen einem Rotor des Elektromotors und einem Stator des Elektromotors angeordnet ist. Hierdurch ist ein den Rotor umgebender Stator geschützt zwischen dem Antriebsgehäuse und dem Spalttopf untergebracht, so dass dieses elektrische Bauteil des Elektromotors gegenüber abgeschiedenem Öl gekapselt ist.

Gemäß einer ersten Ausführungsvariante ist es vorgesehen, dass das erste Lager in der Öffnung der Trennwand gehalten ist und die Welle das erste Lager durchläuft. Hierdurch erfolgt die Lagerung der Welle in einem zentralen Bereich eines aus dem Zentrifugengehäuse und dem Antriebsgehäuse gebildet Gesamtgehäuses. Durch diese Anordnung ist ein kompakter und robuster Aufbau des Zentrifugalabscheiders gegeben.

Es ist auch vorgesehen, dass der Spalttopf oberhalb des Mittelabschnitts zu der Trennwand hin einen ringförmigen Flansch umfasst und mit diesem, insbesondere unter Zwischenlage einer umlaufenden Dichtung gegenüber der Trennwand abgedichtet ist. Hierdurch ist ein technisch einfacher und optimal wirkender Anschluss des Spalttopfs an die Trennwand realisiert.

Es ist auch vorgesehen, dass der Spalttopf unterhalb des Mittelabschnitts einen Anschlussstutzen bildet und mit diesem, insbesondere unter Zwischenlage einer umlaufenden Dichtung in einer Öffnung des Antriebsgehäuses aufgenommen ist, wobei es insbesondere auch vorgesehen ist, dass der Anschlussstutzen derart ausgebildet ist, dass von außen ein Ölkanal anschließbar ist. Hierdurch ist der Trennwand gegenüberliegend ebenfalls ein technisch einfacher und optimal wirkender Anschluss des Spalttopfs an das Antriebsgehäuse realisiert. Dadurch, dass sich die Öffnung der Trennwand und die Öffnung des Antriebsgehäuses gegenüberliegen ist es möglich, den Spalttopf zwischen der Trennwand und einem der Trennwand gegenüberliegenden Boden des Antriebsgehäuses einzuklemmen und so dauerhaft einen Anpressdruck auf die Dichtungen aufrecht zu erhalten.

Eine zweite Ausführungsvariante der Erfindung sieht vor, dass die Welle sich durch eine Öffnung des Antriebsgehäuses bzw. durch die im Anspruch 5 genannte Öffnung des Antriebsgehäuses erstreckt und das erste Lager außerhalb der Antriebskammer angeordnet ist und an dem Antriebsgehäuse gelagert ist. Hierdurch ist eine besonders stabile Lagerung der Welle gegeben, welche mit minimalem Aufwand auch eine Revision des Lagers ermöglicht, da zur Revision keine Demontage des Antriebsgehäuses erforderlich ist.

Es ist auch vorgesehen, dass die Trennwand durch einen Boden des Zentrifugengehäuses gebildet ist. Durch eine sich hierdurch ergebende Verwendung des Bodens des Zentrifugengehäuses als Deckel für das Antriebsgehäuse lässt sich Material einsparen. Bei der ersten Ausführungsvariante ist durch diese Konstruktion ein rascher Austausch des Elektromotors möglich, da dieser zusammen mit dem Antriebsgehäuse unkompliziert von dem Zentrifugengehäuse abgenommen werden kann.

Weiterhin ist es vorgesehen, dass zwischen dem Spalttopf und dem Rotor insbesondere umlaufend ein Luftspalt ausgebildet, wobei der Luftspalt insbesondere derart bemessen ist, dass der Spalttopf von dem Rotor derart beabstandet ist, dass Öl ungehindert in Richtung einer Längsachse der Welle an einer Innenwand des Spalttopfs abfließen kann. Durch eine derartige Ausführung ist sichergestellt, dass die Funktion des Elektromotors nicht durch abfließendes Öl beeinträchtigt ist und dass sich im Bereich des Rotors kein abfließendes Öl anstaut und den Elektromotor bremst.

Im Hinblick auf beide Ausführungsvarianten ist es vorgesehen, dass das erste Lager derart dichtungsfrei ausgebildet ist, dass Öl zwischen einem Innenring und einem Außenring des ersten Lagers an Wälzkörpern des Lagers entlang fließen kann. Hierdurch ist es bei der ersten Ausführungsvariante gewährleistet, dass das abfließende Öl, ohne dass ein ungewünschter Rückstau entsteht, von der Abscheidekammer in die Antriebskammer fließen kann. Hierdurch ist es bei der zweite Ausführungsvariante gewährleistet, dass das abfließende Öl, ohne dass ein ungewünschter Rückstau entsteht, aus der Antriebskammer durch die Öffnung des Antriebsgehäuses in einen Ölkanal abfließen kann. Bei beiden Ausführungsvarianten ist hierdurch eine kontinuierliche Schmierung des ersten Lagers sichergestellt, so dass dessen Verschließ minimiert und eine prognostizierte Lebensdauer zuverlässig erreicht werden kann.

Es ist auch vorgesehen, dass das erste Lager als Abfluss ausgebildet ist und dass eine Oberseite der Trennwand derart geformt ist, dass sich auf der Oberseite sammelndes Öl bei senkrecht im Raum stehender Welle zu dem ersten Lager fließt. Hierdurch ist das ungewünschte Entstehen eines Rückstaus von abfließendem Öl vermieden.

Weiterhin ist es vorgesehen, dass der Zentrifugalabscheider ein Gebläserad umfasst, wobei das Gebläserad von der Welle angetrieben ist und insbesondere mit der Welle drehfest verbunden ist, wobei das Gebläserad insbesondere in dem Spalttopf benachbart zu einem Rotor des Elektromotors und insbesondere unterhalb oder oberhalb des Rotors des Elektromotors angeordnet ist. Durch die Ausstattung des Zentrifugalabscheiders mit einem derartigen Gebläserad lässt sich ein Abfließen des abgeschiedenen Öls durch den Elektromotor hindurch weiter verbessern, so dass die Wahrscheinlichkeit für das Entstehen eines ungewünschten Rückstaus weiter verringert wird und damit ein extrem zuverlässiger Betrieb des Zentrifugalabscheiders bezüglich der Abführung von abgeschiedenem Öl erreicht wird.

Weiterhin ist es vorgesehen, dass durch das sich drehende Gebläserad zwischen der Öffnung der Trennwand und dem Gebläserad in dem Spalttopf ein Unterdruck erzeugt ist und dass durch das sich drehende Gebläserad abhängig von dessen Anordnung unterhalb oder oberhalb des Rotors zu der Öffnung des Antriebsgehäuses hin ein Überdruck erzeugt ist. Eine derartige Auslegung des Gebläserads begünstigt ein rückstaufreies Abfließen von abgeschiedenem Öl zusätzlich.

Es ist auch vorgesehen, dass ein Stator des Elektromotors entweder direkt an einer Innenmantelfläche des Antriebsgehäuses anliegt oder indirekt unter Zwischenlage eines thermischen Leiters an einer Innenmantelfläche des Antriebsgehäuses anliegt. Hierdurch ist eine optimale Kühlung des Elektromotors über das Antriebsgehäuse und zusätzlich über das mit dem Antriebsgehäuse verbundene Zentrifugengehäuse gewährleistet.

Weiterhin ist es vorgesehen, dass Elektronikbauteile einer Elektronikeinheit des Elektromotors über ein elektrisch isolierendes Wärmeleitmedium, insbesondere eine Wärmeleitpaste wärmeleitend an eine Innenseite eines Bodens des Antriebsgehäuses angeschlossen sind, wobei die Elektronikbauteile insbesondere auf einer Leiterplatte angeordnet sind. Hierdurch ist eine optimale Kühlung der Elektronikbauteile des Elektromotors sicher gestellt, so dass eine Überhitzung dieser Bauteile zuverlässig vermieden ist.

Es ist auch vorgesehen, dass das Antriebsgehäuse zu dem Zentrifugengehäuse hin einen Anschlussflansch umfasst und mit diesem an einem an einer Unterseite eines Bodens des Zentrifugengehäuses ausgebildeten Gegenflansch derart verbunden ist, dass die Antriebskammer allseitig geschlossen ist. Durch eine derartige Konstruktion ist ein zuverlässiger und stabiler Zusammenhalt von Zentrifugengehäuse und Antriebsgehäuse sowie eine einfache Ausrichtung des Antriebsgehäuses bzw. des in dem Antriebsgehäuse aufgenommen Elektromotors auf das Zentrifugengehäuse sichergestellt. Weiterhin ist es gewährleistet, dass das Antriebsgehäuse zu Revisionszwecken einfach und zeitsparend demontiert und montiert werden kann.

Weiterhin ist es vorgesehen, dass der Zentrifugalabscheider als Blow-by-Gas-Zentrifugalabscheider für einen Verbrennungsmotor ausgebildet ist.

Es ist auch vorgesehen, dass ein Einlass, durch welchen das Blow-by-Gas in die Abscheidekammer einströmt, durch das zweite Lager oder durch das zweite Lager und wenigstens einen das Zentrifugengehäuse durchdringenden Zufuhrkanal (143a, 143b) gebildet ist. Durch eine derartige Ausbildung lässt sich das Zentrifugengehäuse mit günstigeren Werkzeugkosten herstellen, da weniger Öffnungen vorgesehen werden müssen. Weiterhin kann hierdurch das zweite Lager dauerhaft, kostengünstig und effektiv geschmiert werden, wodurch dessen Lebensdauer erhöht wird.

Schließlich ist es vorgesehen, dass der Zentrifugalabscheider einen Blow-by-Gas-Anschluss umfasst, wobei der Blow-by-Gas-Anschluss derart dimensioniert ist und derart an dem Zentrifugengehäuse angeordnet ist, dass von diesem das zweite Lager mit Blow-by-Gas versorgt ist oder dass von diesem das zweite Lager und der wenigstens eine Zufuhrkanal mit Blow-by-Gas versorgt sind. Durch einen derartigen Blow-by-Gas-Anschluss lässt sich der Zentrifugalabscheider einfach an einen Verbrennungsmotor anschließen.

Im Sinne der Erfindung umfasst das Abscheiden von Öl auch das Abscheiden von Schmutzpartikeln, welche in dem Blow-by-Gas enthalten sind.

Weitere Einzelheiten der Erfindung werden in der Zeichnung anhand von schematisch dargestellten Ausführungsbeispielen beschrieben.

Hierbei zeigt:
- Figur 1a:: eine schematische Schnittdarstellung eines oberen Teils einer ersten Ausführungsvariante eines erfindungsgemäßen Zentrifugalabscheiders;
- Figur 1b:: einen schematische Schnittdarstellung eines unteren Teils einer ersten Ausführungsvariante des erfindungsgemäßen Zentrifugalabscheiders, vom dem in der Figur 1a bereits der obere Teil gezeigt ist und
- Figur 2:: eine schematische Schnittdarstellung einer zweiten Ausführungsvariante eines erfindungsgemäßen Zentrifugalabscheiders.

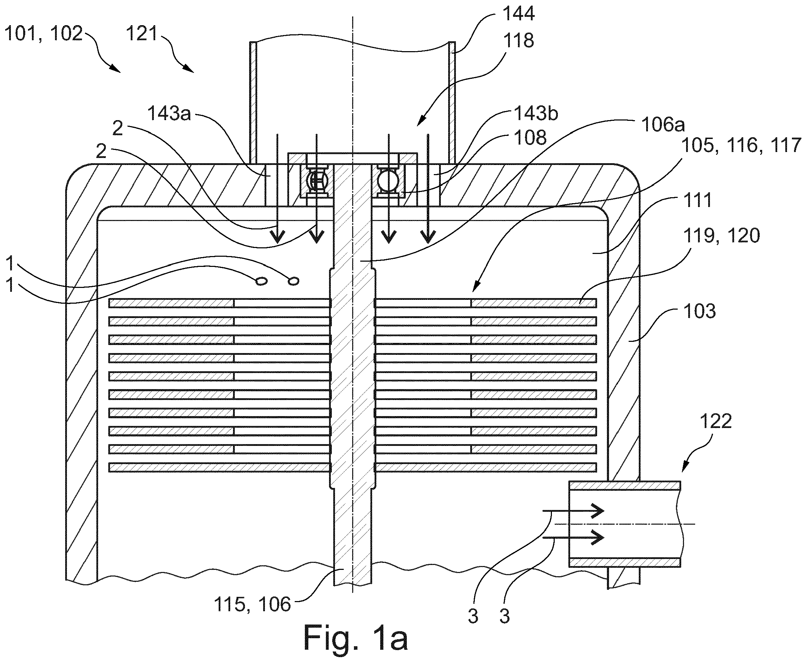

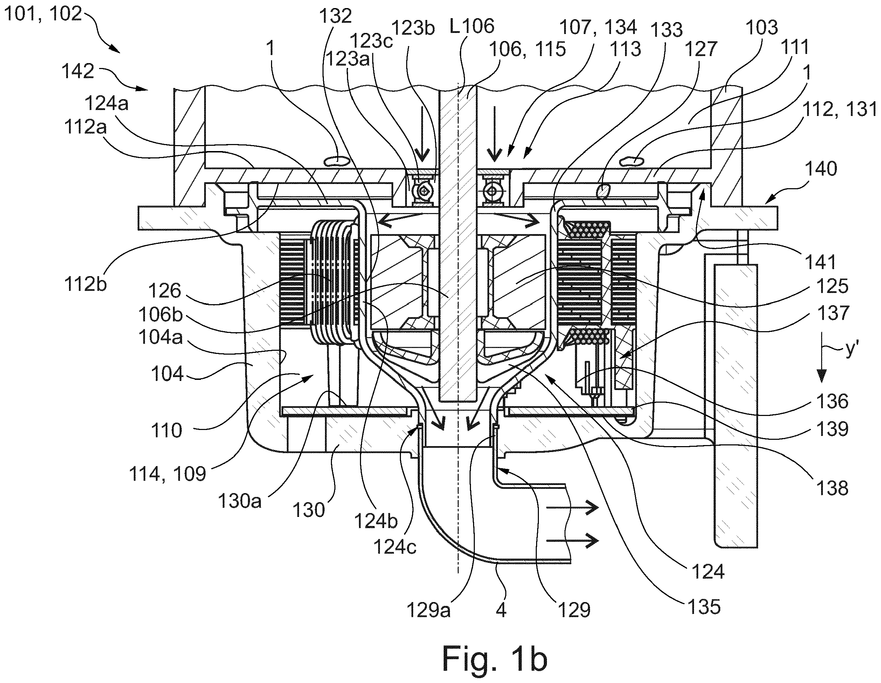

Die Figur 1a und 1b zeigen in schematischer Darstellung und aufgeteilt auf zwei Figuren eine erste Ausführungsvariante eines erfindungsgemäßen Zentrifugalabscheiders 101, wobei der Zentrifugalabscheider 101 als Blow-by-Gas-Zentrifugalabscheider 102 ausgebildet ist. Hierbei ist in der Figur 1a ein oberer Teil des Zentrifugalabscheider s 1 und in der Figur 1b ein untere Teil des Zentrifugalabscheider s 1 gezeigt.

Der Zentrifugalabscheider 101 zum Abscheiden von Öl 1 umfasst ein Zentrifugengehäuse 103, ein Antriebsgehäuse 104, einen Abscheiderotor 105, eine Welle 106, ein erstes Lager 107, ein zweites Lager 108 und einen Antrieb 109. Hierbei ist in dem Antriebsgehäuse 104 eine Antriebskammer 110 ausgebildet und hierbei ist in dem Zentrifugengehäuse 103 eine Abscheidekammer 111 ausgebildet. Zwischen der Antriebskammer 110 und der Abscheidekammereine 111 ist eine Trennwand 112 ausgebildet, wobei die Trennwand 112 eine Öffnung 113 umfasst. Die Welle 106 erstreckt sich durch die Öffnung 113 der Trennwand 112 hindurch in die Abscheidekammer 111 und in die Antriebskammer 110. Der Abscheiderotor 105 ist mit der Welle 106 drehfest verbunden und in der Abscheidekammer 111 angeordnet. Der Antrieb 109 ist in der Antriebskammer 110 angeordnet und treibt die Welle 106 an. Der Antrieb 109 ist als Elektromotor 114 ausgebildet, welcher die Welle 106 derart direkt antreibt, dass die Welle 106 eine Motorwelle 115 des Elektromotors 114 bildet.

Obwohl das Zentrifugengehäuse 103 und die Welle 106 in den Figuren 1a und 1b mit unterschiedlichen Schraffuren gezeigt sind und die in den Figuren 1a und 1b gezeigten Wanddicken des Zentrifugengehäuses 103 voneinander abweichen, ist der Gesamtaufbau des Zentrifugalabscheiders 101 so zu verstehen, dass ein in der Figur 1a gezeigter oberer Abschnitt des Zentrifugengehäuses 103 auf den in der Figur 1b sichtbaren unteren Abschnitt des Zentrifugengehäuses 103 aufgesetzt ist und hierdurch die geschlossene Abscheidekammer 111 gebildet ist.

Der Abscheiderotor 105 ist exemplarisch als Tellerpaket 116 in Form eines Scheibenstapels 117 dargestellt. Oberhalb des Abscheiderotors 105 weist das Zentrifugengehäuse 103 eine weitere Öffnung 118 auf, in welcher das zweite Lager 108 aufgenommen ist. Grundsätzlich können Tellerpakete 116 mit unterschiedlichsten geometrischen Formen der Teller zum Einsatz kommen. Die in der Figur 1a gezeigten Scheiben 119 bilden flache Teller 120. Diese Bauform dient nur zur beispielhaften Erläuterung des Aufbaus des Abscheiderotors 105. Es ist vorgesehen den Abscheiderotor 105 entsprechend den jeweiligen Anforderungen auszugestalten.

Der Zentrifugalabscheider 101 umfasst an dem Zentrifugengehäuse 103 weiterhin einen Einlass 121 und einen Auslass 122, welche beide rein schematisch dargestellt sind. Über den Einlass 121 strömt sogenanntes Blow-by-Gas 2 in die Abscheidekammer 111 ein und über den Auslass 122 tritt gereinigtes Gas 3 aus der Abscheidekammer aus.

Das erste Lager 107, welches auch als untere Lager bezeichnet wird, ist in der Öffnung 113 der Trennwand 112 gehalten. Hierbei ist Trennwand 112 durch das Zentrifugengehäuse 103 gebildet. Die Welle 106 durchläuft das erste Lager 107. In Bezug auf das erste Lager 107 und eine Ausrichtung des Zentrifugalabscheiders 101 im Raum ist der Abscheiderotor 105 an einem oberen Ende 106a der Welle 106 gelagert und ist der Elektromotor 114 an einem unteren Ende 106b der Welle 106 angeordnet.

Das aus dem Blow-by-Gas 2 abgeschiedene Öl 1 sammelt sich auf einer Oberseite 112a der Trennwand 112 und fließt durch das als Wälzlager ausgebildete erste bzw. untere Lager 107 zwischen dessen Außenring 123a und dessen Innenring 123b vorbei an dessen Wälzkörpern 123c in die Antriebskammer 110. Gemäß einer alternativen Ausführungsvariante sind das obere und das untere Lager nicht als Wälzlager, sondern als Gleitlager ausgebildet. Es kann auch vorgesehen sein, eines der beiden Lager als Wälzlager und das andere der beiden Lager als Gleitlager auszubilden.

Der Elektromotor 114 umfasst einen Spalttopf 124, wobei ein hohlzylindrischer Mittelabschnitt 124b des Spalttopfes 124 zwischen einem Rotor 125 des Elektromotors 114 und einem Stator 126 des Elektromotors 114 angeordnet ist. Oberhalb des Mittelabschnitts 124b umfasst der Spalttopf 124 zu der Trennwand 112 hin einen ringförmigen Flansch 124a. Gemäß einer in die Figur 1b exemplarisch aufgenommenen Ausführungsvariante liegt der Spalttopf 124a mit dem ringförmigen Flansch 124a unter Zwischenlage einer umlaufenden Dichtung 127 abdichtend an einer Unterseite 112b der Trennwand 112 an. Alternativ kann wahlweise mit oder ohne Dichtung auch eine abdichtende radiale Anlage vorgesehen sein. Grundsätzlich sind der Spalttopf und ggf. vorhandene Dichtungsbauteile derart gestaltet, dass sich das abfließende Öl in der Antriebskammer ausschließlich innerhalb des Spalttopfes befindet und ein außerhalb des Spalttopfes liegender Teil der Antriebskammer zuverlässig vor dem Eindringen von abfließendem Öl geschützt ist.

Unterhalb des Mittelabschnitts 124b umfasst der Spalttopf 124 einen Anschlussstutzen 124c. Mit diesem ist der Spalttopf 124 unter Zwischenlage einer umlaufenden Dichtung 128 in einer Öffnung 129 des Antriebsgehäuses 104 aufgenommen. Hierbei liegt die Dichtung 128 an einer Wandung 129a der Öffnung 129 an. Die Öffnung 129 ist in einem Boden 130 des Antriebsgehäuses 104 ausgebildet. Hierbei ist der Anschlussstutzen 124c in einem Bereich, mit welchem dieser durch die Öffnung 129 tritt und über die Dichtung 128 hinausreicht, derart ausgeführt, dass ein rohrförmiger Ölkanal 4 an den Anschlussstutzen 124c anschließbar ist. Die in dem Boden 130 des Antriebsgehäuses 104 ausgebildete Öffnung 129 liegt der in der Trennwand 112 ausgebildeten Öffnung 113 bezogen auf eine Längsachse L106 der Welle 106 unmittelbar gegenüber.

Die Trennwand 112 ist durch einen Boden 131 des Zentrifugengehäuses 103 gebildet. Zu der Trennwand 112 hin ist das Antriebsgehäuse 104 offen ausgebildet.

Zwischen dem Spalttopf 124 und dem Rotor 125 ist ein umlaufender Luftspalt 132 ausgebildet, wobei der Luftspalt 132 derart bemessen ist, dass der Zentrifugalabscheider 101 von dem Rotor 125 derart beabstandet ist, dass Öl ungehindert in y` Richtung der Längsachse L106 der Welle 106 an einer Innenwand 133 des Spalttopfs 124 abfließen kann.

Das oben bereits erwähnte erste bzw. untere Lager 107 ist dichtungsfrei ausgebildet, so dass abgeschiedenes Öl sowohl bei stehender Welle 106 als auch bei sich drehender Welle 106 zwischen dem Innenring 123b und dem Außenring 123a hindurchfließen kann.

Somit ist das erste bzw. untere Lager 107 als Abfluss 134 ausgebildet. Hierbei kann es gemäß einer Ausführungsvariante auch vorgesehen sein, dass die Oberseite 112a der Trennwand 112 trichterartig geformt ist, so dass sich auf der Oberseite 112a sammelndes Öl 1 bei senkrecht im Raum stehender Welle 106 zu Abfluss 134 geleitet wird.

Der Zentrifugalabscheider 101 bzw. der Elektromotor 114 umfasst ein Gebläserad 135. Das Gebläserad 135 wird von der Welle 106 angetrieben und ist hierzu mit der Welle 106 drehfest verbunden. Das Gebläserad 135 ist in dem Spalttopf 124 benachbart zu dem Rotor 125 des Elektromotors 114 und unterhalb des Rotors 125 angeordnet. Hierdurch ist der Elektromotor 114 kompakt aufgebaut. Alternativ kann das Gebläserad auch oberhalb des Rotors angeordnet sein. Auch hierdurch wird ein kompakter Aufbau des Motors erreicht. Gemäß einer weiteren Variante kann es vorgesehen sein, dass Gebläserad zweiteilig auszubilden, derart dass ein Gebläseradabschnitt oberhalb des Rotors und ein Gebläseradabschnitt unterhalb des Rotors ausgebildet ist.

Durch das sich drehende Gebläserad 135 ist zwischen der Öffnung 113 der Trennwand 112 und dem Gebläserad 135 in dem Spalttopf 124 ein Unterdruck erzeugt. Weiterhin ist durch das sich drehende Gebläserad 135 unterhalb des Rotors 125 zu der Öffnung 129 im Boden 130 des Antriebsgehäuses 104 hin, ein Überdruck erzeugt. Hierdurch wird ein Ablaufen des abgeschiedenen Öls in die Pfeilrichtung y' unterstützt.

Der Stator 126 des Elektromotors 114 liegt direkt an einer Innenmantelfläche 104a des Antriebsgehäuses 104 an. Elektronikbauteile 136 einer Elektronikeinheit 137 des Elektromotors 114 sind über ein elektrisch isolierendes Wärmeleitmedium 138 wärmeleitend an eine Innenseite 130a des Bodens 130 des Antriebsgehäuses 104 angeschlossen. Hierbei sind die Elektronikbauteile 136 auf einer Leiterplatte 139 angeordnet.

Das Antriebsgehäuse 104 umfasst zu dem Zentrifugengehäuse 103 hin einen Anschlussflansch 140 und ist mit diesem mit einem an der Unterseite 112b der Trennwand 112 des Zentrifugengehäuses 103 ausgebildeten Gegenflansch 141 derart verbunden, dass ein stabiles Gesamtgehäuse 142 gebildet ist und dass die Antriebskammer 110 allseitig geschlossen ist.

Der Einlass 121, durch welchen das Blow-by-Gas 2 in die Abscheidekammer 111 einströmt (siehe Figur 1a) ist durch das zweite Lager 108 und zwei das Zentrifugengehäuse 103 durchdringende Zufuhrkanäle 143a, 143b gebildet. Weiterhin ist aus der Figur 1a ersichtlich, dass der Zentrifugalabscheider 101 einen Blow-by-Gas-Anschluss 144 umfasst. Dieser ist so bemessen und so an dem Zentrifugengehäuse 103 angeordnet, dass von diesem sowohl das zweite Lager 108 mit Blow-by-Gas 2 beaufschlagt ist, als auch die Zufuhrkanäle 143a, 143b mit Blow-by-Gas 2 beaufschlagt sind. Somit kann das Blow-by-Gas 2 durch das obere Lager 108 und durch die Zufuhrkanäle 143a, 143b in die Abscheidekammer einströmen.

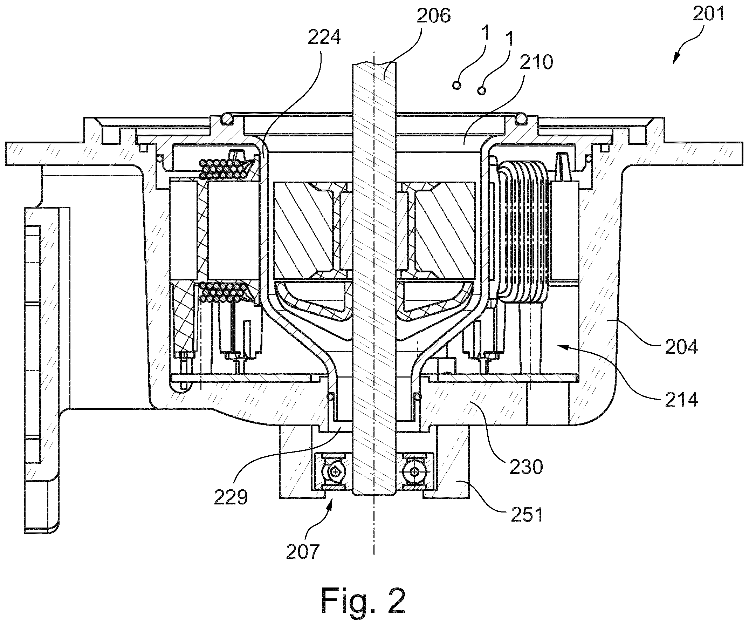

In der Figur 2 ist in einer schematischen Schnittdarstellung eine zweite Ausführungsvariante eines erfindungsgemäßen Zentrifugalabscheiders 201 gezeigt. Hierbei ist ein Zentrifugengehäuse des Zentrifugalabscheiders 201 nicht dargestellt. Dieses ist jedoch grundsätzlich vergleichbar zu dem in den Figuren 1a und 1b gezeigten Zentrifugengehäuse ausgeführt. Insofern wird auf die dortige Beschreibung Bezug genommen.

Im Unterschied zu dem Zentrifugengehäuse der ersten Ausführungsvariante weist das Zentrifugengehäuse der zweiten Ausführungsvariante zwar die in der Trennwand angeordnete Öffnung auf, umfasst aber kein in der Öffnung gehaltenes erstes Lager. Vielmehr ist das erste Lager 207 der zweiten Ausführungsvariante unterhalb eines Elektromotors 214 angeordnet wie dies in der Figur 2 gezeigt ist.

Somit kann Öl 1 durch die nicht dargestellte Öffnung der Trennwand direkt in eine Antriebskammer 210 eines Antriebsgehäuses 204 abfließen.

Eine Welle 206 erstreckt sich durch eine Öffnung 229 des Antriebsgehäuses 204, wobei das erste Lager 207 - wie erwähnt - außerhalb der Antriebskammer 210 angeordnet ist und an dem Antriebsgehäuse 204 gelagert ist.

Im Übrigen sind ein Elektromotor 214 mit seinem Spalttopf 224 und das Antriebsgehäuse 204 vergleichbar zu der in den Figuren 1a und 1b gezeigten ersten Ausführungsvariante ausgeführt. Insofern wird auf die dortige Beschreibung Bezug genommen.

Auch das erste bzw. untere Lager 207 der in der Figur 2 gezeigten zweiten Ausführungsvariante wird von dem abgeschiedenen Öl durchlaufen und geschmiert. Allerdings durchfließt das abgeschiedene Öl bei der zweiten Ausführungsvariante zunächst den Elektromotor 214 entlang des Spalttopfs 224 und durchtritt das erste Lager 207 erst nachdem es durch die Öffnung 229 in einem Boden 230 des Antriebsgehäuses 204 geflossen ist. Zur Aufnahme und Halterung des ersten Lagers 207 ist das Antriebsgehäuse 204 gegenüber dem Antriebsgehäuse der ersten Variante um einen hohlzylindrischen Lagerhalter 251 ergänzt, welcher mit dem Boden 230 des Antriebsgehäuses 204 verbunden ist. Der Lagerhalter 251 ist gemäß einer nicht dargestellten Ausführungsvariante derart ausgebildet, dass dieser einen Anschlussstutzen zum Anschluss eines Ölkanals umfasst. Ein nicht dargestelltes zweites Lager ist entsprechend der Figur 1a angeordnet und wird mittels eines dem Zentrifugalabscheider 201 von einem zugeordneten Verbrennungsmotor zugeführten Blow-by-Gases geschmiert.

Grundsätzlich wird ergänzend noch ausgeführt, dass das dichtungsfreie erste Lager den Vorteil mit sich bringt, dass für den Zentrifugalabscheider Lebensdauern erreicht werden können, welche weit über der Lebensdauer von Wellendichtungen liegen. Dies ist wichtig, um die hohen Forderungen, welche an die Laufleistung von Zentrifugalabscheidern gestellt werden, erfüllen zu können

Wenn die Welle vom Rotor des Elektromotors angetrieben wird, erfolgt die Ölabscheidung in dem vom Blow-by-Gas durchströmten Zentrifugalgehäuse des Zentrifugalabscheiders. Das gesamte abgeschiedene Öl läuft anschließend durch das erste bzw. untere Lager, welches auch als unteres Wellenlager bezeichnet wird. Durch ein Gebläserad, welches sich auf derselben Welle befindet, wird zum einen ein Unterdruck erzeugt, der sowohl den Ölfluss durch den Luftspalt zwischen Rotor und Spalttopf unterstützt, und zum anderen auch einen Überdruck aufbaut, der den Ölfluss in Richtung Kurbelgehäuse des Verbrennungsmotors sicherstellt. Der Ölkanal zum Kurbelgehäuse kann sowohl extern am Antriebsgehäuse, welches gleichzeitig einen weiteren Teil des Zentrifugengehäuses bildet, montiert, als auch direkt im Antriebsgehäuse integriert sein. Der Stator und die Leiterplatte mit der Elektronik für die Motoransteuerung sind im Antriebsgehäuse so angeordnet, dass die Verlustwärme vom Stator direkt und die Verlustwärme von den Elektronikbauteilen auf der Leiterplatte über eine Wärmeleitmedium in Form von Wärmeleitpaste an das kühlere Antriebsgehäuse abgeführt werden kann.

Bei der zweiten Ausführungsvariante befindet sich das erste Lager, welche auch als unteres Wellenlager bezeichnet wird, unterhalb des Rotors. Das gesamte abgeschiedene Öl läuft auch bei dieser Anordnung durch das erste Lager und dient zu dessen Schmierung und zur Abfuhr der Verlustwärme.

Durch der ersten und zweiten Ausführungsvariante entsprechende Konstruktionen werden insbesondere auch die nachfolgend genannten Vorteile erreicht:
- Zuverlässige Funktion des Elektromotors über die geforderte Lebensdauer;
- Vermeidung von Ablagerungen im Spalttopf;
- Kosteneinsparung durch Verzicht auf eine Wellendichtung;
- Kein Leistungsverlust durch die Wellendichtung geringere Wärmebelastung im Bereich des ersten Lagers;
- Kühlung und Schmierung des ersten Lagers bzw. Wellenlagers durch das abgeschiedene Öl;
- Zuverlässige Rückleitung des abgeschiedenen Öls in das Kurbelgehäuse des Verbrennungsmotors;
- Sicherer Betrieb, auch wenn die Antriebswelle bis zu ± 45° bzw. der gesamte Zentrifugalabscheider aus der vertikalen Lage geschwenkt wird;
- Kühlung des Stators des Elektromotors und der Elektronikbauteile auf der Leiterplatte über Zentrifugen- bzw. Antriebsgehäuse.

### Bezugszeichenliste:

- 1: Öl
- 2: Blow-by-Gas
- 3: gereinigtes Gas
- 4: Ölkanal

- 101: Zentrifugalabscheider
- 102: Blow-by-Gas-Zentrifugalabscheider
- 103: Zentrifugengehäuse
- 104: Antriebsgehäuse
- 104a: Innenmantelfläche von 104
- 105: Abscheiderotor
- 106: Welle
- 106a: oberes Ende von 106
- 106b: unteres Ende von 106
- 107: erstes Lager / unteres Lager
- 108: zweites Lager
- 109: Antrieb
- 110: Antriebskammer
- 111: Abscheidekammer
- 112: Trennwand
- 112a: Oberseite der Trennwand 112
- 112b: Unterseite der Trennwand 112
- 113: Öffnung in 112
- 114: Elektromotor
- 115: Motorwelle
- 116: Tellerpaket
- 117: Scheibenstapel
- 118: weitere Öffnung in 103
- 119: Scheibe
- 120: flacher Teller
- 121: Einlass
- 122: Auslass
- 123a: Außenring von 107
- 123b: Innenring von 107
- 123c: Wälzkörper von 107
- 124: Spalttopf
- 124a: ringförmiger Flansch
- 124b: Mittelabschnitt von 124
- 124c: Abschlussstutzen
- 125: Rotor von 114
- 126: Stator von 114
- 127: Dichtung von 124a von 124
- 128: Dichtung von 124c von 124
- 129: Öffnung des Antriebsgehäuses
- 129a: Wandung von 129
- 130: Boden von 104
- 130a: Innenseite von 130
- 131: Boden von 103
- 132: Luftspalt zwischen 124 und 125
- 133: Innenwand von 124
- 134: Abfluss
- 135: Gebläserad
- 136: Elektronikbauteile
- 137: Elektronikeinheit
- 138: Wärmeleitmedium
- 139: Leiterplatte
- 140: Anschlussflansch von 104
- 141: Gegenflansch an 112
- 142: Gesamtgehäuse
- 143a, 143b: Zufuhrkanal
- 144: Blow-by-Gas-Anschluss

- L106: Längsachse der Welle
- 201: Zentrifugalabscheider
- 204: Antriebsgehäuse
- 206: Welle
- 207: erstes Lager
- 210: Antriebskammer
- 214: Elektromotor
- 224: Spalttopf
- 229: Öffnung von 204
- 251: hohlzylindrischer Lagerhalter

## Patentansprüche

1. Zentrifugalabscheider (101; 201), insbesondere Zentrifugalabscheider zum Abscheiden von Öl (1) umfassend ein Zentrifugengehäuse (103), ein Antriebsgehäuse (104), einen Abscheiderotor (105), eine Welle (106), ein erstes Lager (107), ein zweites Lager (108) und einen Antrieb (109),
- wobei in dem Antriebsgehäuse (104) eine Antriebskammer (110) ausgebildet ist,
- wobei in dem Zentrifugengehäuse (103) eine Abscheidekammer ausgebildet ist,
- wobei zwischen der Antriebskammer (110) und der Abscheidekammer (111) eine Trennwand (112) ausgebildet ist,
- wobei die Trennwand (112) eine Öffnung (113) umfasst,
- wobei sich die Welle (106) durch die Öffnung (113) der Trennwand (112) hindurch in die Abscheidekammer (111) und in die Antriebskammer (110) erstreckt,
- wobei der Abscheiderotor (105) mit der Welle (106) drehfest verbunden ist und in der Abscheidekammer (111) angeordnet ist, - wobei der Antrieb (109) in der Antriebskammer (110) angeordnet ist und die Welle (106) antreibt,
- dass der Antrieb (109) als Elektromotor (114) ausgebildet ist, welcher die Welle (106) direkt antreibt, derart dass die Welle (106) eine Motorwelle (115) des Elektromotors (114) bildet, **dadurch gekennzeichnet,**
- **dass** der Elektromotor (114) einen Spalttopf (124) umfasst, wobei ein hohlzylindrischer Mittelabschnitt (124b) des Spalttopfes (124) zwischen einem Rotor (125) des Elektromotors (114) und einem Stator (126) des Elektromotors
(114) angeordnet ist.

2. Zentrifugalabscheider nach Anspruch 1, **dadurch**
**gekennzeichnet, dass** das erste Lager (107) in der Öffnung (113) der Trennwand gehalten ist und die Welle (106) das erste Lager (107) durchläuft.

3. Zentrifugalabscheider nach Anspruch 1, **dadurch**
**gekennzeichnet, dass** der Spalttopf (124) oberhalb des Mittelabschnitts (124b) zu der Trennwand (112) hin einen ringförmigen Flansch (124a) umfasst und mit diesem, insbesondere unter Zwischenlage einer umlaufenden Dichtung (127) gegenüber der Trennwand (112) abgedichtet ist.

4. Zentrifugalabscheider nach Anspruch 1 oder 3, **dadurch**
**gekennzeichnet, dass** der Spalttopf (124) unterhalb des Mittelabschnitts (124b) einen Anschlussstutzen (124c) bildet und mit diesem, insbesondere unter Zwischenlage einer umlaufenden Dichtung (128) in einer Öffnung (129) des Antriebsgehäuses (104) aufgenommen ist.

5. Zentrifugalabscheider nach Anspruch 1 und insbesondere wenigstens einem der Ansprüche 3 bis 4, **dadurch gekennzeichnet, dass** die Welle (206) sich durch eine Öffnung (229) des Antriebsgehäuses (204) bzw. durch die im Anspruch 4 genannte Öffnung (229) des Antriebsgehäuses (204) erstreckt und das erste Lager (207) außerhalb der Antriebskammer (204) angeordnet ist und an dem Antriebsgehäuse (204) gelagert ist.

6. Zentrifugalabscheider nach wenigstens einem der vorhergehenden Ansprüche, **dadurch gekennzeichnet, dass** die Trennwand (112) durch einen Boden (131) des Zentrifugengehäuses (103) gebildet ist.

7. Zentrifugalabscheider nach Anspruch 1, **dadurch**
**gekennzeichnet, dass** zwischen dem Spalttopf (124) und dem Rotor (125) insbesondere umlaufend ein Luftspalt (132) ausgebildet ist, wobei der Luftspalt (132) insbesondere derart bemessen ist, dass der Spalttopf (124) von dem Rotor (125) derart beabstandet ist, dass Öl (1) ungehindert in Richtung einer Längsachse (L106) der Welle (106) an einer Innenwand (133) des Spalttopfs (124) abfließen kann.

8. Zentrifugalabscheider nach Anspruch 2 oder 5, **dadurch**
**gekennzeichnet, dass** das erste Lager (107) derart dichtungsfrei ausgebildet ist, dass Öl (1) zwischen einem Innenring (123b) und einem Außenring (123a) des ersten Lagers (107) an Wälzkörpern (123c) des Lagers (107) entlang fließen kann.

9. Zentrifugalabscheider nach Anspruch 1 oder 8, **dadurch**
**gekennzeichnet, dass** das erste Lager (107) als Abfluss (134) ausgebildet ist und dass eine Oberseite (112a) der Trennwand (112) derart geformt ist, dass sich auf der Oberseite (112a) sammelndes Öl (1) bei senkrecht im Raum stehender Welle (106) zu dem ersten Lager (107) fließt.

10. Zentrifugalabscheider nach Anspruch 1, **dadurch**
**gekennzeichnet, dass** der Zentrifugalabscheider (101; 201) ein Gebläserad (135) umfasst, wobei das Gebläserad (135) von der Welle (106) angetrieben ist und insbesondere mit der Welle (106) drehfest verbunden ist, wobei das Gebläserad (135) insbesondere in dem Spalttopf (124) benachbart zu einem Rotor (125) bzw. dem Rotor (125) des Elektromotors (114) und insbesondere unterhalb oder oberhalb des Rotors (125) des Elektromotors (114) angeordnet ist, wobei es insbesondere auch vorgesehen ist,
- dass durch das sich drehende Gebläserad (135) zwischen der Öffnung (113) der Trennwand (112) und dem Gebläserad (135) in dem Spalttopf (124) ein Unterdruck erzeugt ist und
- dass durch das sich drehende Gebläserad (135) abhängig von dessen Anordnung unterhalb oder oberhalb des Rotors (125) zu der Öffnung (129) des Antriebsgehäuses (104) hin ein Überdruck erzeugt ist.

11. Zentrifugalabscheider nach wenigstens einem der vorhergehenden Ansprüche, **dadurch gekennzeichnet, dass** ein Stator (126) des Elektromotors (114) entweder direkt an einer Innenmantelfläche (104a) des Antriebsgehäuses (104) anliegt oder indirekt unter Zwischenlage eines thermischen Leiters an einer Innenmantelfläche (104a) des Antriebsgehäuses (104) anliegt.

12. Zentrifugalabscheider nach wenigstes einem der vorhergehenden Ansprüche, **dadurch gekennzeichnet, dass** Elektronikbauteile (136) einer Elektronikeinheit (137) des Elektromotors (114) über ein elektrisch isolierendes Wärmeleitmedium (138), insbesondere eine Wärmeleitpaste wärmeleitend an eine Innenseite (130a) eines Bodens (130) des Antriebsgehäuses (104) angeschlossen sind, wobei die Elektronikbauteile (136) insbesondere auf einer Leiterplatte (139) angeordnet sind.

13. Zentrifugalabscheider nach wenigstens einem der vorhergehenden Ansprüche, **dadurch gekennzeichnet, dass** das Antriebsgehäuse (104) zu dem Zentrifugengehäuse (103) hin einen Anschlussflansch (140) umfasst und mit diesem an einem an der Unterseite (112b) der Trennwand (112) des Zentrifugengehäuse (103) ausgebildeten Gegenflansch (141) derart verbunden ist, dass die Antriebskammer (110) allseitig geschlossen ist.

14. Zentrifugalabscheider nach Anspruch 1, **dadurch gekennzeichnet, dass** der Zentrifugalabscheider als Blow-by-Gas-Zentrifugalabscheider (102) für einen Verbrennungsmotor ausgebildet ist.

15. Zentrifugalabscheider nach wenigstens einem der vorhergehenden Ansprüche, **dadurch gekennzeichnet, dass** ein Einlass (121), durch welchen das Blow-by-Gas (2) in die Abscheidekammer (111) einströmt, durch das zweite Lager (108) oder durch das zweite Lager (108) und wenigstens einen das Zentrifugengehäuse (103) durchdringenden Zufuhrkanal (143a, 143b)gebildet ist, wobei es insbesondere auch vorgesehen ist,
- dass der Zentrifugalabscheider (101) einen Blow-by-Gas-Anschluss (144) umfasst, wobei der Blow-by-Gas-Anschluss (144) derart dimensioniert ist und derart an dem Zentrifugengehäuse (103) angeordnet ist und
- dass von diesem das zweite Lager (108) mit Blow-by-Gas (2) versorgt ist oder dass von diesem das zweite Lager (108) und der wenigstens eine Zufuhrkanal (143) mit Blow-by-Gas (2) versorgt sind.

## Claims

1. A centrifugal separator (101; 201), in particular centrifugal separator for separating oil (1), comprising a centrifuge housing (103), a drive housing (104), a separator rotor (105), a shaft (106), a first bearing (107), a second bearing (108) and a drive (109),
- wherein a drive chamber (110) is formed in the drive housing (104),
- wherein a separation chamber (111) is formed in the centrifuge housing (103),
- wherein a dividing wall (112) is formed between the drive chamber (110) and the separation chamber (111),
- wherein the dividing wall (112) comprises an opening (113),
- wherein the shaft (106) extends through the opening (113) of the dividing wall (112) into the separation chamber (111) and into the drive chamber (110),
- wherein the separation rotor (105) is connected to the shaft (106) in a rotationally secure manner and is arranged in the separation chamber (111),
- wherein the drive (109) is arranged in the drive chamber (110) and drives the shaft (106),
- that the drive (109) is in the form of an electric motor (114) which directly drives the shaft (106) in such a manner that the shaft (106) forms a motor shaft (115) of the electric motor (114),
**characterised in that**
- the electric motor (114) comprises a containment can (124), wherein a hollow-cylindrical central portion (124b) of the containment can (124) is arranged between a rotor (125) of the electric motor (114) and a stator (126) of the electric motor (114).

2. The centrifugal separator according to claim 1, **characterised in that** the first bearing (107) is retained in the opening (113) of the dividing wall (112) and the shaft (106) extends through the first bearing (107).

3. The centrifugal separator according to claim 1, **characterised in that** the containment can (124) comprises above the central portion (124b) in the direction towards the dividing wall (112) an annular flange (124a) and is sealed therewith, in particular with a circumferential seal (127) being interposed, with respect to the dividing wall (112).

4. The centrifugal separator according to claim 1 or 3, **characterised in that** the containment can (124) below the central portion (124b) forms a connection nozzle (124c) and is received therewith, in particular with a circumferential seal (128) being interposed in an opening (129) of the drive housing (104).

5. The centrifugal separator according to claim 1 and in particular at least one of claims 3 to 4, **characterised in that** the shaft (206) extends through an opening (229) of the drive housing (204) or through the opening (229) of the drive housing (204) as mentioned in claim 4, and the first bearing (207) is arranged outside the drive chamber (204) and is supported on the drive housing (204).

6. The centrifugal separator according to at least one of the preceding claims, **characterised in that** the dividing wall (112) is formed by a base (131) of the centrifuge housing (103).

7. The centrifugal separator according to claim 1, **characterised in that** between the containment can (124) and the rotor (125), in particular circumferentially, an air gap (132) is formed, wherein the air gap (132) is in particular sized in such a manner that the containment can (124) is spaced apart from the rotor (125) in such a manner that oil (1) can flow away in a state unimpeded in the direction of a longitudinal axis (L106) of the shaft (106) on an inner wall (133) of the containment can (124).

8. The centrifugal separator according to claim 2 or 5, **characterised in that** the first bearing (107) is constructed without a seal in such a manner that oil (1) can flow between an inner ring (123b) and an outer ring (123a) of the first bearing (107) along roller members (123c) of the bearing (107).

9. The centrifugal separator according to claim 1 or 8, **characterised in that** the first bearing (107) is in the form of a discharge (134) and **in that** an upper side (112a) of the dividing wall (112) is formed in such a manner that oil (1) which accumulates on the upper side (112a) flows towards the first bearing (107) when the shaft (106) is perpendicular in space.

10. The centrifugal separator according to claim 1, **characterised in that** the centrifugal separator (101; 201) comprises a fan wheel (135), wherein the fan wheel (135) is driven by the shaft (106) and in particular is connected to the shaft (106) in a rotationally secure manner, wherein the fan wheel (135) is arranged in particular in the containment can (124) adjacent to a rotor (125) or the rotor (125) of the electric motor (114) and in particular below or above the rotor (125) of the electric motor (114), wherein there is also in particular provision for
- a reduced pressure to be produced as a result of the rotating fan wheel (135) between the opening (113) of the dividing wall (112) and the fan wheel (135) in the containment can (124) and
- an excess pressure to be produced as a result of the rotating fan wheel (135) depending on the arrangement thereof below or above the rotor (125) towards the opening (129) of the drive housing (104).

11. The centrifugal separator according to at least one of the preceding claims, **characterised in that** a stator (126) of the electric motor (114) either bears directly on an inner covering face (104a) of the drive housing (104) or bears indirectly with a thermal conductor being interposed on an inner covering face (104a) of the drive housing (104).

12. The centrifugal separator according to at least one of the preceding claims, **characterised in that** electronic components (136) of an electronic unit (137) of the electric motor (114) are connected by means of an electrically insulating thermally conductive medium (138), in particular a thermally conductive paste, in a thermally conductive manner to an inner side (130a) of a base (130) of the drive housing (104), wherein the electronic components (136) are arranged in particular on a printed circuit board (139).

13. The centrifugal separator according to at least one of the preceding claims, **characterised in that** the drive housing (104) in the direction towards the centrifuge housing (103) comprises a connection flange (140) and is connected thereto at a counter-flange (141) which is formed on the lower side (112b) of the dividing wall (112) of the centrifuge housing (103) in such a manner that the drive chamber (110) is closed at all sides.

14. The centrifugal separator according to claim 1, **characterised in that** the centrifugal separator is in the form of a blow-by gas centrifugal separator (102) for an internal combustion engine.

15. The centrifugal separator according to at least one of the preceding claims, **characterised in that** an inlet (121), through which the blow-by gas (2) flows into the separation chamber (111), is formed by the second bearing (108) or by the second bearing (108) and at least one supply channel (143a, 143b) which extends through the centrifuge housing (103), wherein there is in particular also provision for
- the centrifugal separator (101) to comprise a blow-by gas connection (144), wherein the blow-by gas connection (144) is sized in such a manner and is arranged on the centrifuge housing (103) in such a manner and
- for the second bearing (108) to be supplied thereby with blow-by gas (2) or for the second bearing (108) and the at least one supply channel (143) to be supplied thereby with blow-by gas (2).

## Revendications

1. Séparateur centrifuge (101 ; 201), notamment séparateur centrifuge de séparation d'huile (1), comprenant un boîtier de centrifugeuse (103), un boîtier d'entraînement (104), un rotor de séparation (105), un arbre (106), un premier palier (107), un deuxième palier (108) et un entraînement (109),
- dans lequel une chambre d'entraînement (110) est formée dans le boîtier d'entraînement (104),
- dans lequel une chambre de séparation (111) est formée dans le boîtier de centrifugeuse (103),
- dans lequel une cloison (112) est formée entre la chambre d'entraînement (110) et la chambre de séparation (111),
- dans lequel la cloison (112) comprend une ouverture (113),
- dans lequel l'arbre (106) s'étend à travers l'ouverture (113) de la cloison (112) dans la chambre de séparation (111) et dans la chambre d'entraînement (110),
- dans lequel le rotor de séparation (105) est solidaire en rotation de l'arbre (106) et est disposé dans la chambre de séparation (111),
- dans lequel l'entraînement (109) est disposé dans la chambre d'entraînement (110) et entraîne l'arbre (106),
- que l'entraînement (109) est réalisé sous la forme d'un moteur électrique (114) qui entraîne directement l'arbre (106), de telle manière que l'arbre (106) forme un arbre moteur (115) du moteur électrique (114),
**caractérisé en ce que**
- le moteur électrique (114) comprend une coque d'entrefer (124), une section médiane (124b) cylindrique creuse de la coque d'entrefer (124) étant disposée entre un rotor (125) du moteur électrique (114) et un stator (126) du moteur électrique (114).

2. Séparateur centrifuge selon la revendication 1, **caractérisé en ce que** le premier palier (107) est maintenu dans l'ouverture (113) de la cloison (112) et l'arbre (106) traverse le premier palier (107).

3. Séparateur centrifuge selon la revendication 1, **caractérisé en ce que** la coque d'entrefer (124) comprend, au-dessus de la section médiane (124b), en direction de la cloison (112), une bride annulaire (124a) avec laquelle elle est étanchée vis-à-vis de la cloison (112), notamment avec interposition d'un joint circonférentiel (127).

4. Séparateur centrifuge selon la revendication 1 ou 3, **caractérisé en ce que** la coque d'entrefer (124) forme une tubulure de raccordement (124c) en dessous de la section médiane (124b) et est reçue conjointement avec celle-ci dans une ouverture (129) du boîtier d'entraînement (104), notamment avec interposition d'un joint circonférentiel (128).

5. Séparateur centrifuge selon la revendication 1 et notamment l'une au moins des revendications 3 à 4, **caractérisé en ce que** l'arbre (206) s'étend à travers une ouverture (229) du boîtier d'entraînement (204), ou bien l'ouverture (229) du boîtier d'entraînement (204) mentionnée dans la revendication 4, et le premier palier (207) est disposé à l'extérieur de la chambre d'entraînement (204) et est monté sur le boîtier d'entraînement (204).

6. Séparateur centrifuge selon l'une au moins des revendications précédentes, **caractérisé en ce que** la cloison (112) est formée par un fond (131) du boîtier de centrifugeuse (103).

7. Séparateur centrifuge selon la revendication 1, **caractérisé en ce qu'**un entrefer (132) est formé entre la coque d'entrefer (124) et le rotor (125), notamment sur tout le pourtour, l'entrefer (132) étant notamment dimensionné de telle sorte que la coque d'entrefer (124) se trouve à une distance telle du rotor (125) que l'huile (1) est en mesure de s'écouler librement, selon un axe longitudinal (L106) de l'arbre (106), sur une paroi intérieure (133) de la coque d'entrefer (124).

8. Séparateur centrifuge selon la revendication 2 ou 5, **caractérisé en ce que** le premier palier (107) est conçu sans joints, de telle façon que l'huile (1) peut s'écouler, entre une bague intérieure (123b) et une bague extérieure (123a) du premier palier (107), le long de corps de roulement (123c) du palier (107).

9. Séparateur centrifuge selon la revendication 1 ou 8, **caractérisé en ce que** le premier palier (107) est réalisé sous la forme d'un drain (134) et **en ce qu'**une face supérieure (112a) de la cloison (112) est de forme telle que l'huile (1) s'accumulant sur la face supérieure (112a) s'écoule vers le premier palier (107) lorsque l'arbre (106) est vertical dans l'espace.

10. Séparateur centrifuge selon la revendication 1, **caractérisé en ce que** le séparateur centrifuge (101 ; 201) comprend une roue de soufflante (135), la roue de soufflante (135) étant entraînée par l'arbre (106) et étant notamment solidaire en rotation dudit arbre (106), ladite roue de soufflante (135) étant notamment disposée dans la coque d'entrefer (124) à côté d'un rotor (125), ou bien dudit rotor (125) du moteur électrique (114), et notamment en dessous ou au-dessus du rotor (125) du moteur électrique (114), où il est notamment également prévu que
- une dépression soit générée dans la coque d'entrefer (124) par la roue de soufflante (135) en rotation, entre l'ouverture (113) de la cloison (112) et ladite roue de soufflante (135), et
- une surpression soit générée par la roue de soufflante (135) en rotation, en direction de l'ouverture (129) du boîtier d'entraînement (104), en dessous ou au-dessus du rotor (125) selon la disposition de ladite roue.

11. Séparateur centrifuge selon l'une au moins des revendications précédentes, **caractérisé en ce qu'**un stator (126) du moteur électrique (114) est soit en contact direct avec une surface d'enveloppe intérieure (104a) du boîtier d'entraînement (104) soit en contact indirect avec une surface d'enveloppe intérieure (104a) du boîtier d'entraînement (104) avec interposition d'un conducteur thermique.

12. Séparateur centrifuge selon l'une au moins des revendications précédentes, **caractérisé en ce que** des composants électroniques (136) d'une unité électronique (137) du moteur électrique (114) sont reliés de manière thermoconductrice à une face intérieure (130a) d'un fond (130) du boîtier d'entraînement (104) au moyen d'un matériau thermoconducteur (138) électriquement isolant, notamment une pâte thermoconductrice, lesdits composants électroniques (136) étant disposés notamment sur une carte de circuit imprimé (139).

13. Séparateur centrifuge selon l'une au moins des revendications précédentes, **caractérisé en ce que** le boîtier d'entraînement (104) comprend, vers le boîtier de centrifugeuse (103), une bride de raccordement (140) et est raccordé par celle-ci à une contre-bride (141) constituée sur la face inférieure (112b) de la cloison (112) du boîtier de centrifugeuse (103), de telle manière que la chambre d'entraînement (110) est fermée sur tous les côtés.

14. Séparateur centrifuge selon la revendication 1, **caractérisé en ce que** le séparateur centrifuge est formé sous la forme d'un séparateur centrifuge de gaz de fuite (102) pour moteur à combustion interne.

15. Séparateur centrifuge selon l'une au moins des revendications précédentes, **caractérisé en ce qu'**une entrée (121), par laquelle le gaz de fuite (2) s'écoule dans la chambre de séparation (111), est constituée par le deuxième palier (108) ou par le deuxième palier (108) et au moins un canal d'alimentation (143a, 143b) traversant le boîtier de centrifugeuse (103), où il est notamment également prévu que
- le séparateur centrifuge (101) comprenne un raccord de gaz de fuite (144), ledit raccord de gaz de fuite (144) étant dimensionné de telle manière et disposé de telle manière sur le boîtier de centrifugeuse (103) et
- que le deuxième palier (108) soit alimenté en gaz de fuite (2) par celui-ci, ou que le deuxième palier (108) ainsi que l'au moins un canal d'alimentation (143) soient alimentés en gaz de fuite (2) par celui-ci.
